# EUROPÄISCHE PATENTSCHRIFT

(11) **EP 0 806 593 B1**
(45) Veröffentlichungstag und Bekanntmachung des Hinweises auf die Patenterteilung: **04.10.2001**
(21) Anmeldenummer: 97107091.7
(22) Anmeldetag: 29.04.1997
(51) Int. Cl.: F16H 61/18, F16H 63/34, F16H 63/30

(54) **Schaltvorrichtung für Wechselgetriebe mit einer Rückwärtsgang-Schaltsperre**
Shift mechanism for change-speed gearing with reverse gear lockout
Dispositif de verrouillage de la marche arrière d'une boîte de vitesses à plusieurs rapports

(30) Priorität: 11.05.1996 DE 19619182
(43) Veröffentlichungstag der Anmeldung: 12.11.1997
(73) Patentinhaber: Ford Global Technologies, Inc., Dearborn, Michigan 48136 (US)
(72) Erfinder: Adams, Gerd, 42799 Leichlingen (DE); Sabel, Gustav, 50765 Koeln (DE)
(74) Vertreter: Messulam, Alec Moses

(56) Entgegenhaltungen:
- EP-A- 0 078 047
- EP-A- 0 170 630
- DE-A- 3 424 793

## Beschreibung

Die Erfindung bezieht sich auf eine Schaltvorrichtung für Wechselgetriebe mit einer Rückwärtsgang-Schaltsperre, der im Obergriff des Patentanspruches 1 erläuterten Art.

Aus der gattungsgemäßen DE-A-34 24 793 ist eine Schaltvorrichtung für Wechselgetriebe mit einer Rückwärtsgang-Schaltsperre bekannt, bei der in einem Getriebegehäuse eine senkrecht angeordnete Schaltwelle vorgesehen ist, die zur Vorwahl von Schaltgassen axial verschiebbar und zum Schalten von Gängen radial verdrehbar ist und wobei an der Schaltwelle ein oberer und ein unterer Schaltfinger vorgesehen ist, um eine Vielzahl von Schaltmitteln auszuwählen und zu betätigen und wobei jedem Schaltfinger eine Schaltsperre zum Blockieren der jeweils nicht ausgewählten Schaltmittel zugeordnet ist.

Bei der bekannten Schaltvorrichtung bestehen die Schaltsperren aus Kulissenbügeln, die zwar die axiale Bewegung der Schaltwelle mitmachen, aber durch eine zusätzliche, parallel zur Schaltwelle angeordnete Stange an einer Drehung gehindert sind. Damit ist die bekannte Schaltsperre verhältnismäßig aufwendig.

Aus der EP-A 0 247 976 ist eine Schaltvorrichtung für Wechselgetriebe mit einer Rückwärtsgang-Schaltsperre bekannt, bei der wieder in einem Getriebegehäuse eine senkrecht angeordnete Schaltwelle vorgesehen ist, die zur Vorwahl von Schaltgassen axial verschiebbar und zum Schalten von Gängen radial verdrehbar ist und in diesem Falle ist durch einen Flansch mit einem Büchsenansatz eine Art Schaltkulisse gebildet, ein Verschwenken der Schaltwelle in Richtung des Rückwärtsganges erst in einer bestimmten axialen Lage der Schaltwelle zuläßt.

Hierbei handelt es sich also um eine Schaltsperre, die ein unbeabsichtigtes, vorzeitiges Einrücken des Rückwärtsganges verhindern soll, die aber nicht unmittelbar eine Rückwärtsgang-Schaltschwinge gegen eine selbsttätige Bewegung sperrt.

Die Aufgabe der Erfindung ist es, eine an sich bekannte und in Produktion befindliche Schaltvorrichtung für Wechselgetriebe mit einer Rückwärtsgang-Schaltsperre, der im Oberbegriff des Patentanspruches 1 erläuterten Art derart zu verbessern, daß nicht nur eine Rückwärtsgang-Schaltsperre zum Vermeiden des unbeabsichtigten Einrücken des Rückwärtsganges vorgesehen wird, sondern daß auch ein selbsttätiges Verschwenken einer verhältnismäßig großen Schaltschwinge, die zum Einrücken des Rückwärtsganges vorgesehen ist, verhindert wird, wenn der Rückwärtsgang nicht angewählt ist.

Gemäß der Erfindung wird diese Aufgabe gelöst, indem bei einer Schaltvorrichtung für Wechselgetriebe mit einer Rückwärtsgang-Schaltsperre der im Oberbegriff des Patentanspruches 1 erläuterten Art die im Kennzeichenteil des Patentanspruches 1 aufgezeigten Merkmale angewendet werden.

Dadurch, daß der untere Schaltfinger zur Betätigung einer ein Rückwärtsgang-Schieberad einrückenden Schaltschwinge vorgesehen ist, die dem unteren Schaltfinger zugeordnete Schaltsperre als ein Sperrschieber mit einer abgekröpften Sperrzunge ausgebildet ist, der an der Schaltwelle axial mitbewegbar aber drehbar angeordnet ist und mit einer abgekröpften Sperrzunge versehen ist und in einem Getriebegehäuse festen Winkelhalter in einem Schlitz gegen Drehung festgelegt ist und die Rückwärtsgang-Schaltschwinge an dem Winkelhalter über einen Bolzen schwenkbar gelagert ist und an einer Seitenkante mit einer Kerbe für die Sperrzunge des Sperrschiebers versehen ist, in der der untere Teil der Sperrzunge bei nicht vorgewähltem Rückwärtsgang eingreift, wird mit einem einfachen Bauteil in Form des Sperrschiebers mit seiner abgekröpften Sperrzunge eine zuverläßige Festlegung der Rückwärtsgang-Schaltschwinge in allen Vorwärtsgängen erreicht und bei ausgewähltem Rückwärtsgang durch Freigeben der Kerbe an der Rückwärtsgang-Schaltschwinge durch den abgekröpften Bereich der Sperrzunge ein Betätigen des Rückwärtsganges ermöglicht.

Zusätzlich zu der Festlegung der Rückwärtsgang-Schaltschwinge durch die Kerbe und die Sperrzunge des Sperrschiebers kann die Anordnung einer Wickel-Schenkelfeder vorgesehen werden, die die Rückwärtsgang-Schaltschwinge in ihre Ruhelage (bei ausgerücktem Rückwärtsgang) vorbelastet.

Die Erfindung wird anhand eines in den Zeichnungen gezeigten Ausführungsbeispieles näher erläutert. Es zeigt:
- Fig. 1: eine vertikale Teilansicht in ein Getriebegehäuse eines Wechselgetriebes auf die Schaltwelle mit den wesentlichen Teilen der erfindungsgemäßen Rückwärtsgang-Schaltsperre.
- Fig. 2: eine Draufsicht auf die Rückwärtsgang-Schaltsperre mit der Rückwärtsgang-Schaltschwinge und dem Rückwärtsgang-Schieberad und einer in Strich-Punkt-Linien gezeigten erläuternden Darstellung.

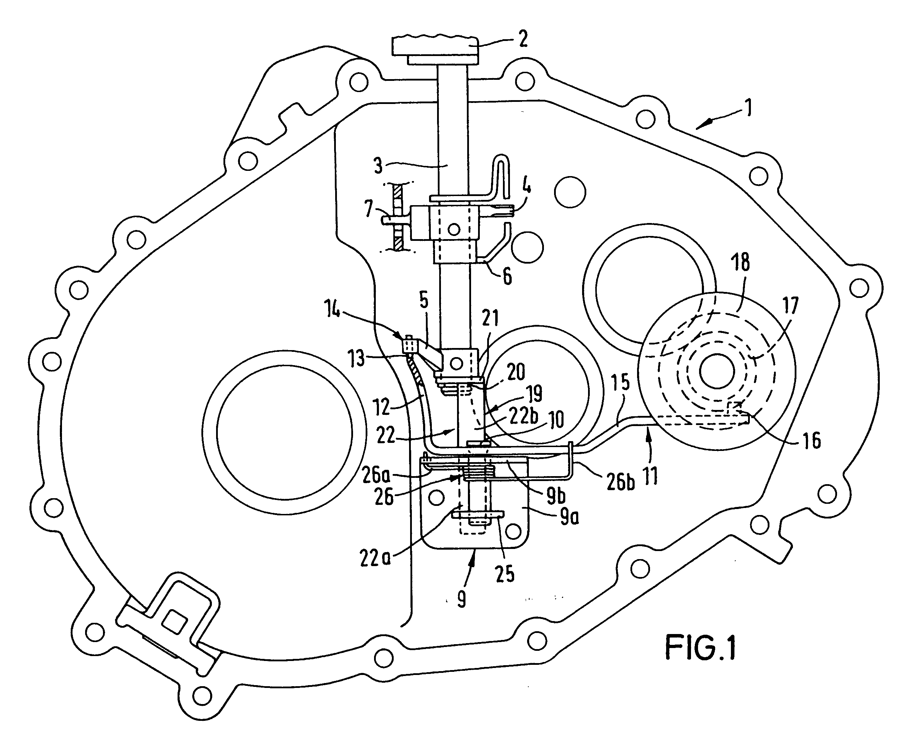

In einem Getriebegehäuse 1 eines Transaxel-Wechselgetriebes sind in an sich bekannter Weise eine Vielzahl von Getriebewellen und Zahnradpaaren angeordnet, um die verschiedenen Gangstufen zu schalten, in der vorliegenden Fig. 1 sind jedoch nur diejenigen Teile der Schaltvorrichtung dargestellt, die für das Verständnis der Erfindung wesentlich sind.

Im Getriebegehäuse 1 ist über eine nicht näher dargestellte Betätigungseinrichtung 2 eine senkrechte Schaltwelle 3 axial verschiebbar und drehbar angeordnet, um durch axiales Verschieben eine Vorwahl von Schaltgassen und durch Verdrehen das Einrücken der Schaltstufen zu ermöglichen.

An der senkrechten Schaltwelle 3 ist ein oberer Schaltfinger 4 und ein unterer Schaltfinger 5 angeordnet.

Der obere Schaltfinger 4 wird hierbei von einem an sich bekannten Kulissenbügel 6 als Schaltsperre begleitet, der über einen Zapfen 7 in einer Art Kulisse in einem Schaltgehäuse (nur angedeutet) gegen Verdrehung festgelegt ist.

Für die erforderliche Einrückbewegung für das Rückwärtsgangschieberad 18 ist an einem im Getriebegehäuse 1 festgelegten Winkelhalter 9 eine um einen Bolzen 10 verschwenkbar gelagerte Rückwärtsgangschaltschwinge 11 angeordnet. Der Winkelhalter 9 besteht hierbei aus einem vertikalen Winkelhalterteil 9a, der am Getriebegehäuse 1 befestigt ist, und aus einem horizontalen Winkelhalterteil 9b, der den Bolzen 10 trägt. Die Rückwärtsgangschaltschwinge 11 weist einen Hebelarm 12 auf, dessen oberes Ende eine Nut 13 aufweist, in den ein Betätigungskopf 14 des unteren Schaltfingers 5 eingreift, und an deren anderem Hebelarm 15 ein Bolzen 16 angeordnet ist, der in eine Betätigungs-Ringnut 17 des Rückwärtsgang-Schieberades 18 eingreift.

Unterhalb des unteren Schaltfingers 5 ist an der Schaltwelle 3 ein Sperrschieber 19 angeordnet, der aus einem mit der Schaltwelle 3 über einen Sprengring 20 drehbeweglich verbundenen Ringteil 21 und einer abgekröpften Sperrzunge 22 besteht. Die abgekröpfte Sperrzunge 22 besteht aus einem unteren Teil 22a und einem oberen gekröpften Teil 22b, wobei der untere Teil 22a in einem Schlitz 23 im Winkelhalter 9 axial geführt ist, so daß der Sperrschieber gegen eine Mitdrehung mit der Schaltwelle 3 festgehalten ist.

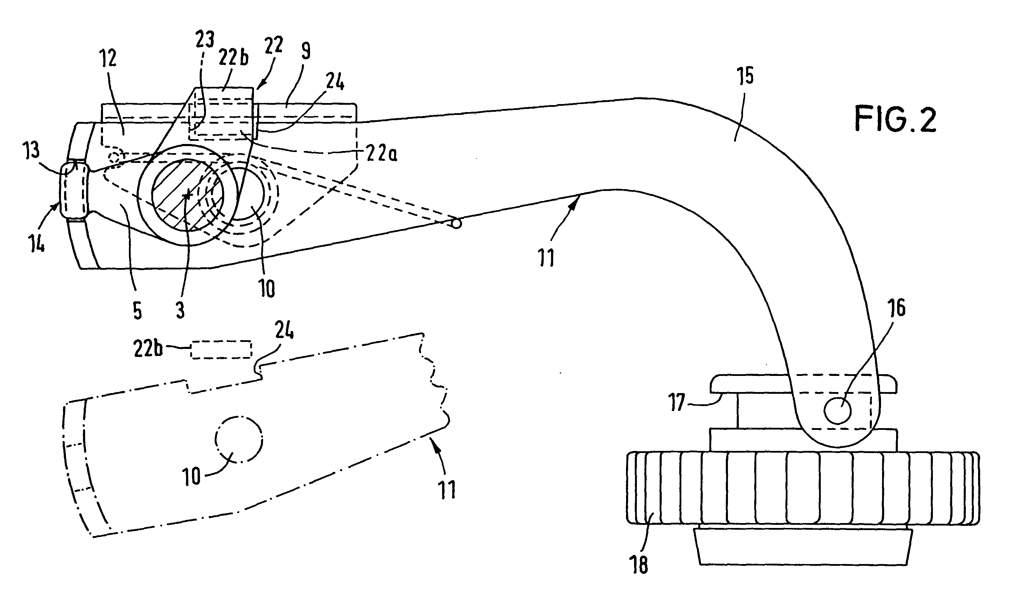

In Fig. 1 ist die Schaltwelle 3 und der untere Schaltfinger 5 in der Lage bei ausgewähltem Rückwärtsgang dargestellt und dementsprechend ist der untere Teil 22a der Sperrzunge 22 soweit nach unten verschoben, daß eine am Hebelarm 15 der Rückwärtsgang-Schaltschwinge 11 vorgesehene Kerbe 24 außer Eingriff mit dem unteren Teil 22a der Sperrzunge 22 gelangt. Durch den nunmehr im Bereich der Kerbe 24 der Rückwärtsgang-Schaltschwinge 11 liegenden abgekröpften Bereich 22b der Sperrzunge 22 des Sperrschiebers 19 kann sich die Rückwärtsgang-Schaltschwinge 15 um den für das Einrücken des Rückwärtsgang-Schieberades 18 erforderlichen Winkelbereich verschwenken, wie es in der zur Fig. 2 gehörenden erläuternden Darstellung in Strich-Punkt Linien angedeutet ist.

Der Bolzen 10 zur schwenkbaren Lagerung der Rückwärtsgang-Schaltschwinge 11 kann, um Taumelbewegungen zu vermeiden, an dem Winkelhalter 9 über eine untere Haltelasche 25 abgestützt sein und nimmt eine Wickel-Schenkelfeder 16 auf, deren einer Schenkelarm 26a sich an dem Winkelhalterteil 9b abstützt und deren anderer Schenkelarm 26b am Hebelarm 15 der Rückwärtsgang-Schaltschwinge 11 angreift. Auf diese Weise wird die Rückwärtsgang-Schaltschwinge 11 stets in ihrer Ruhelage, d.h. in ihrer Lage bei ausgerücktem Rückwärtsgang gehalten.

## Patentansprüche

1. Schaltvorrichtung für Wechselgetriebe mit einer Rückwärtsgang-Schaltsperre, mit einer in einem Getriebegehäuse (1) senkrecht angeordneten Schaltwelle (3), die zur Vorwahl von Schaltgassen axial verschiebbar und zum Schalten von Gängen verdrehbar ist und an der ein oberer und ein unterer Schaltfinger (4 und 5) vorgesehen sind, um eine Vielzahl von Schaltmitteln zu betätigen, wobei jedem Schaltfinger (4 und 5) eine Schaltsperre (6 und 19) zum Festlegen der jeweils nicht ausgewählten Schaltmittel zugeordnet ist,
**dadurch gekennzeichnet, daß**
- der untere Schaltfinger (5) zum Betätigen einer ein Rückwärtsgang-Schieberad (18) einrückenden Rückwärtsgang-Schaltschwinge (11) vorgesehen ist,
- die dem unteren Schaltfinger (5) zugeordnete Schaltsperre als ein Sperrschieber (19) mit einer abgekröpften Sperrzunge (22) ausgebildet ist, wobei der Sperrschieber (19) so angeordnet ist, **daß** er von der Schaltwelle (3) axial mitbewegbar ist, aber die Drehung der Schaltwelle nicht behindert, und **daß** er in einem Schlitz (23), der in einem im Getriebegehäuse, befestigtem Winkelhalter (9) angebracht ist, gegen Verdrehung festgelegt ist, und
- die Rückwärtsgang-Schaltschwinge (11) an dem Winkelhalter (9) über einen Bolzen (10) schwenkbar gelagert ist und an einer Seitenkante eine Kerbe (24) aufweist, in der ein unterer Teil (22a) der Sperrzunge (22) bei nicht vorgewähltem Rückwärtsgang sperrend eingreift.

2. Schaltvorrichtung nach Anspruch 1,
**dadurch gekennzeichnet, daß**
- die Rückwärtsgang-Schaltschwinge (11) mit einer um den Schwenkbolzen (10) liegend angeordneten Wickel-Schenkelfeder (26) versehen ist, deren einer Schenkelarm (26a) sich am Winkelhalterteil (9a) abstützt und deren anderer Schenkelarm (26b) am Hebelarm (15) der Rückwärtsgang-Schaltschwinge (11) angreift, um diese in ihrer Ruhelage, d.h. bei ausgerücktem Rückwärtsgang zu halten.

3. Schaltvorrichtung nach den Ansprüchen 1 und 2,
**dadurch gekennzeichnet, daß**
- der Schwenkbolzen (10) für die schwenkbare Lagerung der Rückwärtsgang-Schaltschwinge (11) im Winkelhalter (9) über eine zusätzliche untere Haltelasche (25) gegen Taumelbewegungen abgestützt ist.

## Claims

1. Shift mechanism for change-speed gearing with reverse gear lockout, with a shift shaft (3) arranged vertically in a gearbox (1), which for the purpose of pre-selecting shift paths is axially displaceable and for the purpose of shifting gears is rotatable, and on which an upper and a lower shift finger (4 and 5) are provided, in order to activate a multitude of shift means, wherein each shift finger (4 and 5) is associated with a lockout (6 and 19) for fixing the shift means which has not been selected,
**characterised in that**
- the lower shift finger (5) is provided for activating a reverse gear shift lever (11) engaging a reverse gear sliding gear (18),
- the lockout associated with the lower shift finger (5) is formed as a locking slide member (19) with an angled locking tongue (22), wherein the locking slide member (19) is arranged in such a way that it can be axially moved by the shift shaft (3), but does not impede the rotation of the shift shaft, and that it is fixed against rotation in a recess (23) in an angled holder (9) secured in the gearbox, and
- the reverse gear shift lever (11) is arranged on the angled holder (9) via a bolt (10) in a swivelling way, and on one side edge has a notch (24), in which a lower part (22a) of the locking tongue (22) engages in a locking way when the reverse gear is not pre-selected.

2. Shift mechanism according to Claim 1,
**characterised in that**
- the reverse gear shift lever (11) is provided with a coiled side spring (26) arranged lying around the swivel bolt (10), of which one side arm (26a) rests on the angled holder component (9a) and of which the other side arm (26b) contacts on the lifting arm (15) of the reverse gear shift lever (11), in order to hold this in its position of rest, i.e. when the reverse gear is disengaged.

3. Shift mechanism according to Claims 1 and 2,
**characterised in that**
- the swivel bolt (10) for the swivelling arrangement of the reverse gear shift lever (11) in the angled holder (9) is supported against gyrating movements via an additional lower holding plate (25).

## Revendications

1. Dispositif de commande pour une boîte de vitesses à plusieurs rapports avec un moyen de verrouillage de la marche arrière, avec un axe de commande de vitesses (3) placé perpendiculairement dans un carter de boîte de vitesses (1), axe qui est déplaçable axialement pour la présélection de voies de passage de vitesses et est pivotant radialement pour le passage de vitesses, et sur lequel un doigt supérieur et un doigt inférieur (4 et 5) de la fourchette de commande sont prévus pour actionner une multitude de moyens de commande ou de passage de vitesses, un blocage (6 et 19) de passage de vitesses étant attribué à chaque doigt (4 et 5) de la fourchette de commande pour déterminer le moyen de passage de vitesse non sélectionné, **caractérisé en ce que**
- le doigt inférieur (5) est prévu pour l'actionnement d'une bielle de commande de marche arrière (11) embrayant dans un pignon de marche arrière (18),
- le blocage de passage de vitesses attribué au doigt inférieur (5) est formé comme un registre d'arrêt (19) avec une languette de blocage (22) coudée, le registre d'arrêt (19) étant placé de telle sorte qu'il peut être déplacé aussi axialement par l'axe de commande de vitesses (3), mais que la rotation de l'axe de commande de vitesses n'est pas empêché, **et en ce qu'il** est monté dans une fente (23) d'un support en équerre (9) fixé dans un carter de boîte de vitesses, qui est appliqué dans une fente (23) et est disposé de manière à résister aux torsions, et
- la bielle de commande de marche arrière (11) est montée de manière pivotante sur le support en équerre (9) à l'aide d'un boulon (10) et présente, sur un bord de côté, une entaille (24) dans laquelle une pièce inférieure (22a) de la languette de blocage (22) a prise en se bloquant lorsque la marche arrière n'est pas sélectionnée.

2. Dispositif de changement de vitesses selon la revendication 1, **caractérisé en ce que** la bielle de marche arrière (11) est munie d'un ressort enrouleur à branches (26) placé autour d'un axe oscillant (10), ressort dont un bras (26a) s'appuie contre la pièce de support en équerre (9a) et dont l'autre bras (26b) a prise sur le bras du levier (15) de la bielle de marche arrière (11) pour maintenir cette dernière en position de repos, c.à.d. lorsque la marche arrière est débrayée.

3. Dispositif de changement de vitesses selon les revendications 1 et 2, **caractérisé en ce que** l'axe pivotant (10) pour le positionnement pivotant de la bielle de commande de marche arrière (11) est soutenu dans le support en équerre (9) à l'aide d'un collier de fixation (25) inférieur supplémentaire pour éviter les nutations.
